# EUROPÄISCHE PATENTSCHRIFT

(11) **EP 0 899 164 B1**
(45) Veröffentlichungstag und Bekanntmachung des Hinweises auf die Patenterteilung: **15.12.2004**
(21) Anmeldenummer: 98115874.4
(22) Anmeldetag: 22.08.1998
(51) Int. Cl.: B60R 16/02

(54) **Vorrichtung zur Steuerung der Funktionen eines Autoradios**
Vehicle radio functions controling device
Dispositif pour commander les fonctions d'un auto radio

(30) Priorität: 29.08.1997 DE 19737732
(43) Veröffentlichungstag der Anmeldung: 03.03.1999
(73) Patentinhaber: Grundig Car InterMedia System GmbH, 90471 Nürnberg (DE)
(72) Erfinder: Nöth, Helmut, 90762 Fürth (DE)
(74) Vertreter: Manitz, Finsterwald & Partner

(56) Entgegenhaltungen:
- EP-A- 0 623 995
- DE-A- 4 427 912
- US-A- 5 204 971

## Beschreibung

Die Erfindung betrifft eine Vorrichtung zur Steuerung der Funktionen eines Autoradios, welches eine Steuereinheit aufweist, die, in Ansprache auf mittels einer Bedieneinheit eingegebene Bedienbefehle, Steuersignale an Funktionseinheiten des Autoradios liefert.

Derartige Vorrichtungen sind bereits bekannt. Beispielsweise weist die Bedieneinheit bekannter Autoradios einen Überblendregler auf, mittels dessen der Benutzer die Lautstärke der Signale, die von den hinteren Lautsprechern eines Kraftfahrzeugs abgestrahlt werden, relativ zur Lautstärke der Signale, die von den vorderen Lautsprechern des Kraftfahrzeugs abgestrahlt werden, verändern kann, so daß ein gewünschter Höreindruck entsteht. Weiterhin weist die Bedieneinheit bekannter Autoradios einen Balanceregler auf, mittels dessen die Lautstärke der von den Lautsprechern auf der linken Fahrzeugseite abgestrahlten Signale relativ zur Lautstärke der von den Lautsprechern auf der rechten Fahrzeugseite abgestrahlten Signale verändert werden kann. Ferner weisen bekannte Autoradios auch ein Bedienelement zur Aktivierung und Deaktivierung einer Dolby-Surround-Sound-Betriebsart auf, in welcher die wiedergegebenen Signale einen gewünschten Raumklangeffekt haben.

Weiterhin sind bereits Autoradios mit einer geschwindigkeitsabhängigen Lautstärkeregelung bekannt. Damit wird dem Umstand Rechnung getragen, daß die mit höheren Fahrzeuggeschwindigkeiten verbundene Geräuschentwicklung durch beispielsweise den Wind, den Motor und das Abrollen der Reifen stärker wird und folglich die Verständlichkeit der mittels der Lautsprecher wiedergegebenen Autoradiosignale nur dann gewahrt bleibt, wenn die Wiedergabelautstärke erhöht wird.

Aus EP 0 669 711 ist eine Autoradio-Tonwiedergabeeinrichtung mit einer in Abhängigkeit von externen Störgeräuschen steuerbaren NF-Verstärkeranordnung bekannt. Diese Autoradio-Tonwiedergabeeinrichtung verwendet von der Geschwindigkeit und/oder Drehzahl abhängige Signale zur Steuerung der Lautstärke, anhand einer gespeicherten, fahrzeugspezifischen Kennlinie, welche in einem Mikrocomputer gespeichert ist.

Weiterhin ist es aus der DE 44 27 912 A (Oberbegriff von Anspruch 1) bekannt, zur Anpassung der Ausgangssignale eines Tonwidergabegerätes an den Geräuschpegel im Fahrgastraum eines Kraftfahrzeuges, für bestimmte Fahrzustände spezifische .Kennlinienfelder zu erzeugen, die den Geräuschpegel im Fahrgastraum berücksichtigen und diese in einem Speicher im Kraftfahrzeug zu speichern. Während des Betriebes des Kraftfahrzeuges werden die entsprechenden Fahrzustände erfasst und in Abhängigkeit von diesen erfassten Fahrzuständen die jeweils zutreffenden Kennlinien aus dem Speicher für die Anpassung der Ausgangssignale des Tonwidergabegerätes herangezogen.

Die US-A-5 204 971 beschreibt eine Anordnung zur Tonwiedergabe in einem Kraftfahrzeug, in der bestimmte Geräuschverhältnisse in Tabellenform in einem Speicher des Widergabegerätes abgelegt sind. Über ein Mikrofon wird der Aktuelle Geräuschpegel erfasst und von diesem abhängig eine der gespeicherten Tabellen ausgewählt. Die Korrektur der Widergabe erfolgt dann in Abhängigkeit von den Tabellenwerten.

Aus der EP-A-0 623 995 ist es schließlich bekannt, die Lautstärke eines Autoradios in Abhängigkeit vom Umgebungsschallpegel zu regeln, wobei zur Ermittlung der Führungsgröße für die Regelung nur die Mittelwerte herangezogen werden, die in Sprachpausen der Insassen des Kraftfahrzeuges liegen.

Von Nachteil bei den bekannten Anordnungen ist, dass die individuellen Hörgewohnheiten des Fahrers nur unzureichend berücksichtigt werden. In den Fällen in denen Kennlinien verwendet werden, sind diese fahrzeugspezifisch vorgegeben und mit nur einem Wert abänderbar. Ausgehend von diesem Stand der Technik liegt der Erfindung die Aufgabe zugrunde, eine Vorrichtung mit den im Oberbegriff des Anspruchs 1 angegebenen Merkmalen derart weiterzubilden, daß der Fahrer eines Fahrzeugs von der Notwendigkeit, mittels der Bedieneinheit eine Steuerung der Funktionen des Autoradios vorzunehmen, teilweise entlastet wird und zugleich eine individuellen Klangkonfiguration an die Hörgewohnheiten eines Fahrers erfolgt.

Diese Aufgabe wird bei einer Vorrichtung mit den im Oberbegriff des Anspruchs 1 angegebenen Merkmalen durch die im kennzeichnenden Teil des Anspruchs 1 angegebenen Merkmale gelöst. Vorteilhafte Ausgestaltungen und Weiterbildungen der Erfindung ergeben sich aus den abhängigen Ansprüchen.

Die Vorteile der Erfindung bestehen insbesondere darin, daß in Abhängigkeit von aktuellen Fahrzeugzuständen, insbesondere der Fahrtgeschwindigkeit, und weiteren erfaßbaren Zuständen des Fahrzeugs einer oder mehrere Wiedergabeparameter des Autoradios automatisch im Sinne einer individuellen und fahrerspezifischen Klangverbesserung verändert werden. Dadurch ist der Fahrer des Fahrzeugs von der Notwendigkeit befreit, diese Einstellungen manuell mittels der Bedieneinheit des Autoradios neu einstellen zu müssen.

Weitere vorteilhafte Eigenschaften der Erfindung ergeben sich aus der Erläuterung von Ausführungsbeispielen anhand der Figuren.

Es zeigt:
- FIG 1 ein Ausführungsbeispiel für eine Vorrichtung gemäß der Erfindung;
- FIG 2 ein weiteres Ausführungsbeispiel für eine Vorrichtung gemäß der Erfindung

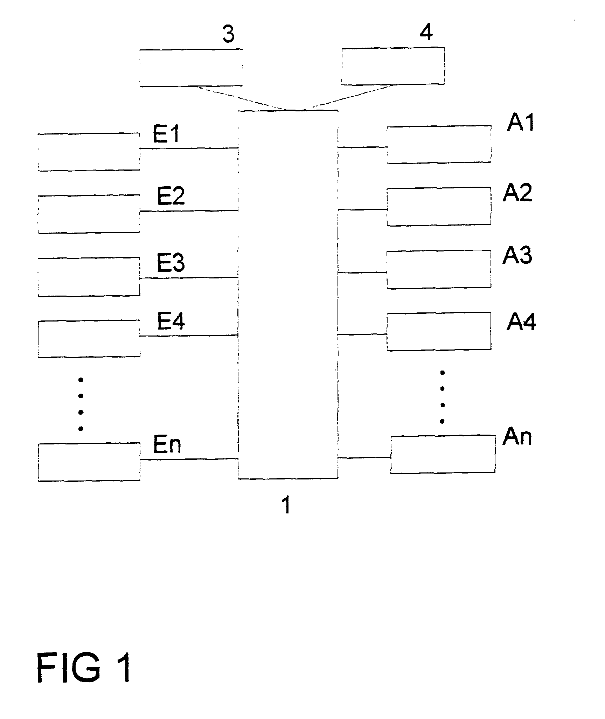

Die Vorrichtung gemäß FIG 1 besteht aus einer Steuereinheit 1, einer Speichereinheit 3, einer Bedieneinheit 4, Funktionseinheiten A1 bis An eines Autoradios und Fahrzeugzustandsdetektoren E1 bis En.

In der Speichereinheit 3 ist ein Kennlinienfeld abgespeichert, über welches die Steuereinheit 1 automatisch die Einstellungen der Funktionseinheiten A1 bis An des Autoradios auf den aktuellen Fahrzeugzustand, welchen die Steuereinheit 1 mittels der Fahrzeugzustandsdetektoren E1 bis En erfaßt und erkennt, anpaßt. Hierdurch wird gewährleistet, daß eine konstanter Klangeindruck im Kraftfahrzeug gewährleistet ist.

Das Kennlinienfeld setzt sich aus unterschiedlichen Kennlinien zusammen. Für jede Funktionseinheit A1 bis An des Autoradios ist jeweils für jeden erfaßten Fahrzeugzustand, welcher über die Fahrzeugzustandsdetektoren E1 bis En erfaßt wird, eine Kennlinie vorhanden. Diese Kennlinien sind beispielsweise zunächst werksseitig auf den jeweiligen Fahrzeugtyp voreingestellt. Verändert der Fahrer des Kraftfahrzeuges einen Fahrzeugzustand, wie etwa die Fahrtgeschwindigkeit, so erkennt die Steuereinheit 1 dies mittels der Fahrzeugzustandsdetektoren E1 bis En und paßt die Einstellungen der Funktionseinheiten A1 bis An an diesen neuen Fahrzeugzustand an.

Neben der Erfassung der Fahrzeugzustände werden weitere Faktoren bei der Erzeugung des Kennfeldes berücksichtigt. Im weiteren werden die Höhrgewohnheiten des Fahrers in Bezug aus Navigationsdurchsagen, Verkehrsfunkdurchsagen usw. berücksichtigt. Außerdem findet Einfluß, wie sich die Höhrgewohnheiten des Fahrers ändern, wenn er beispielsweise telefoniert. Im weiteren wird berücksichtigt, welche die Sitzplatzbelegung im Fahrzeug vorliegt. Diese Einflüße werden ebenfalls im Kennlininfeld berücksichtigt.

Um die spezifischen Hörgewohnheiten eines Fahrers zu berücksichtigen ändert die Steuereinheit 1 das Kennlinienfeld in der Speichereinheit 3 nach den Hörgewohnheiten des Fahrers ab. Über die Fahrzeugzustandsdetektoren E1 bis En werden die unterschiedlichen aktuellen Fahrzeugzustände erfaßt. So erfaßt der Fahrzeugzustandsdetektor E1 beispielsweise die Geschwindigkeit des Fahrzeuges, der Fahrzeugzustandsdetektor E2 die aktuelle Motordrehzahl, der Fahrzeugzustandsdetektor E3 den Zustand der Fahrzeugfenster, d.h. ob und welche Fenster des Fahrzeuges geöffnet oder geschlossen sind, Fahrzeugzustandsdetektor E4 den aktuellen Zustand des Schiebedaches, E5 die aktuelle Gebläsestufe der Lüftung usw.
Die Funktionseinheit A1 des Autoradios ist beispielsweise die Lautstärkeregelung, die Funktionseinheit A2 die Höhenregelung, die Funktionseinheit A3 die Baßregelung, Funktionseinheit A4 die Überblendregelung, Funktionseinheit A5 die Balanceregelung, die Funktionseinheit A6 die Equalizerregelung, die Funktionseinheit A7 die Dynamikkompressionsregelung, die Funktionseinheit A8 die DSP-Effektregelung usw. Alle diese Einstellungen kann der Fahrer des Kraftfahrzeuges über die Bedieneinheit 4 einstellen.
Die Steuereinheit 1 ist derart konzipiert, daß sie einen sogenannten Selbsterkennungsmodus ausführt. In diesem Selbsterkennungsmodus registriert die Steuereinheit 1 die Veränderungen die ein Fahrer des Kraftfahrzeuges an den Funktionseinheiten A1 bis An mittels der Bedieneinheit 4 vornimmt, während das Kraftfahrzeug in Betrieb ist. Zugleich fragt die Steuereinheit 1 den aktuellen Fahrzeugzustand über die Fahrzeugzustandsdetektoren E1 bis En ab und speichert die aktuellen Werte der Fahrzeugzustandsdetektoren E1 bis En und die zugehörigen Einstellungen der Funktionseinheiten A1 bis An in der Speichereinheit 3 ab. Hierdurch ergibt sich über einen gewissen Zeitraum betrachtet eine Sammlung von Einstellungsdaten, welche die Hörgewohnheiten des Fahrers
das Fahrzeuges darstellen.
Aus diesen Daten ermittelt dann die Steuereinheit 1 ein neues Kennlinienfeld für die Einstellungen der Funktionseinheiten A1 bis An des Autoradios, in Abhängigkeit der Fahrzeugzustände, welche die Steuereinheit 1 über die Fahrzeugzustandsdetektoren E1 bis En ermittelt, und ändert das bisherige werksseitig eingestelltes Kennlinienfeld ab oder errechnet ein neues Kennlinienfeld.

Ist beispielsweise das Seitenfenster in Fahrzeug geöffnet und regelt der Fahrer die Lautstärke nach oben aus, so erkennt dies die Steuereinheit 1, denn der Fahrer betätigt die Bedieneinheit 4. Sobald der Fahrer beispielsweise die Einstellung der Lautstärke beendet hat, ermittelt die Steuereinheit 1 die Fahrzeugzustandsdaten anhand der Fahrzeugzustandsdetektoren E1 bis En und die Einstellungen der Funktionseinheiten A1 bis An des Autoradios und speichert diese Daten ab. Schließt nun der Fahrer das geöffnete Fenster wieder, erkennt dies die Steuereinheit 1 und senkt die Lautstärke auf das vorherige Niveau.

Besonders gut geeignet ist diese Vorgehensweise in Bezug auf die Fahrtgeschwindigkeit. Erhöht der Fahrer die Fahrtgeschwindigkeit, werden auch die Fahrtgeräusche größer. In diesem Fall wird der Fahrer die Lautstärke des Autoradios erhöhen, um einen gleichmäßigen Lautstärkeeindruck zu erhalten. Verändert der Fahrer folglich die Geschwindigkeit und auch die Einstellungen einer oder mehrerer Funktionseinheiten A1 bis An des Autoradios, so erfaßt dies die Steuereinheit 1 und speichert diese Daten in der Speichereinheit 3 ab.

Gut geeignet ist diese Vorgehensweise auch in Bezug auf die Gebläsestufe der Lüftung. Erhöht der Fahrer die Gebläsestufe der Lüftung, werden auch die Geräusche im fahrzeuginneren größer, zugleich wird der Höreindruck des Autoradios schlechter. In diesem Fall wird der Fahrer beispielsweise die Lautstärke des Autoradios erhöhen, um einen gleichmäßigen Lautstärkeeindruck zu erhalten. Verändert der Fahrer folglich die Geläsestufe der Lüftung des Fahrzeuges und auch die Lautstärke des Autoradios, so erfaßt dies die Steuereinheit 1 und speichert diese Daten in der Speichereinheit 3 ab.

Liegen nun mehrere derartige Daten im Speicher vor, d.h. unterschiedliche Fahrzeugzustände und hierzu geänderte Einstellungen einer oder mehrerer der Funktionseinheiten A1 bis An, so errechnet und interpoliert die Steuereinheit 1 zwischen den Stützstellen weitere Zwischenwerte und errechnet auf diese Weise ein neues Kennlinienfeld, das den Hörgewohnheiten des Fahrers angepaßt ist.

Verändert ein Fahrer mehrere Einstellungen der Funktionseinheiten A1 bis An bei veränderten Fahrzuständen des Fahrzeuges, so mittelt die Steuereinheit 1 die einzelnen Kennlinien des Kennlinienfeldes bzgl. der einzelnen Einstellungen und mittelt die Einstellungen der Funktionseinheiten A1 bis An. Dies bedeutet, daß, für den Fall, daß das Kennlinienfeld bei Erhöhung der Fahrtgeschwindigkeit beispielsweise eine Lautstärkeerhöhung aufweist und zugleich ein Fenster des Fahrzeuges geöffnet wird, was ebenfalls zu einer Lautstärkeerhöhung führen würde, Steuereinheit 1 die Lautstärke nicht linear angepaßt, sondern einen Mittelwert aus den unterschiedlichen Kennlininen des Kennlinienfeldes ermittelt.

Verändert der Fahrer nun einen der erfaßten Fahrzeugzustände, so erkennt dies die Steuereinheit 1 und paßt die Einstellungen der Funktionseinheiten A1 bis An automatisch über das ermittelte Kennlinienfeld nach den bisherigen Hörgewohnheiten des Fahrers ab.

Besonders vorteilhaft hat sich erwiesen die Einstellungen der Funktionseinheiten A1 bis An und die zugehörigen Fahrzeugzustände, welche durch die Fahrzeugzustandsdetektoren E1 bis En ermittelt werden, erst dann abzuspeichern und das Kennlinienfeld anzupassen, oder die Einstellungen der Funktionseinheiten A1 bis An über das Kennlinienfeld anzupassen, wenn der veränderte Fahrzeugzustand über einen längeren Zeitraum annähernd konstant war. Als Zeitdauer haben sich ca. drei Sekunden als vorteilhaft erwiesen. Hierdurch wird vermieden, daß etwa ein kurzes öffnen und/oder schließen eines Fensters oder ein kurzer Beschleunigungsvorgang zugleich zu einer Abänderung des Kennlinienfeldes und/oder einer automatischen Anpassung der Einstellungen der Funktionseinheiten A1 bis An führt. Dies hat den Vorteil, daß es nicht zu einem ständigen verändern der Einstellungen der Funktionseinheiten A1 bis An kommt.

Es besteht aber durchaus die Möglichkeit durch jede Betätigung der Bedieneinheit 4 das Kennlinienfeld anzupassen. Dies hat den Vorteil, daß jede Änderung der Funktionseinheiten A1 bis An sofort Einfluß auf das Kennlinienfeld hat.

Im weiteren hat sich als vorteilhaft erwiesen, die Werte der Einstellungen der Funktionseinheiten A1 bis An jeweils über einen gewissen Zeitraum, bei gleichen Fahrzeugzuständen, zu mitteln und das Kennlinienfeld auf die gemittelten Werte anzupassen, da die Hörgewohnheiten des Fahrers des Kraftfahrzeuges gewissen Streuungen unterliegen. Durch eine Mittelung wird diese Streuung ausgemittelt. Die Mittelungszeit ist abhängig vom Grad der Streuung.
Im Falle daß die Streuungen sehr stark sind, oder daß verschiedene Fahrer mit deutlich unterschiedlichen Höhrgewohnheiten das Fahrzeug benutzen ist es durch eine Mittelungen über einen kurzen Zeitraum möglich schnell auf die unterschiedlichen Hörgewohnheiten zu reagieren.

In einer weiteren vorteilhaften Ausgestaltung der Erfindung ist vorgesehen, daß eine Identifizierung des Fahrers erfolgt und für jeden Fahrer eine individuelles Höhrerprofil, sprich ein individuelles Kennlinienfeld angelegt wird. Eine Fahreridentifizierung ist dadurch möglich, daß für jeden Fahrer ein individueller Identifizierungscode vergeben wird, oder daß die Indentifizierung über einen Transponder erfolgt, der sich im Kraftfahrzeugschlüssel befindet und heutzutage als Stand der Technik im Bereich Wegfahrsperren anzusehen ist. Über den Kraftfahrzeugschlüssel - für jeden Fahrer muß folglich je ein Schlüssel vorhanden sein, wobei jeder Schlüssel unterschiedlich kodiert sein muß - wird ein Fahrer identifiziert.

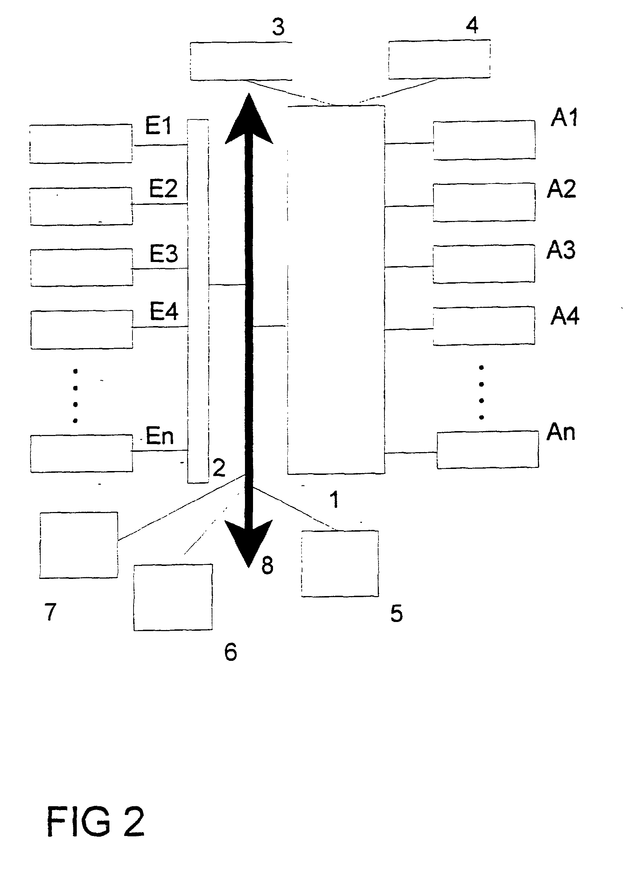

Eine weitere vorteilhafte Ausgestaltung der Erfindung wird anhand FIG 2 beschrieben.

Die Vorrichtung gemäß FIG 2 besteht aus einer Steuereinheit 1, einer Konvertierschaltung 2, einer Speichereinheit 3, einer Bedieneinheit 4, Funktionseinheiten A1 bis An eines Autoradios und Fahrzeugzustandsdetektoren E1 bis En.

Dieses Ausführungsbeispiel unterscheidet sich vom ersten Ausführungsbeispiel im wesentlichen dadurch, daß die Fahrzeugzustandsdetektoren E1 bis En bereits ohnehin fahrzeugseitig vorgesehen sind, um über eine Konvertierungsschaltung 2 Signale auf einem fahrzeugseitigen Datenbus 8 zur Verfügung zu stellen. An den Datenbus 8 des Fahrzeugs sind eine Vielzahl von Fahrzeugmodulen bzw. Fahrzeugsystemen wie das Bremssystem 5, ein Navigationssystem 6 und eine Alarmanlage 7 angeschlossen. Weiterhin ist an diesen Datenbus 8 auch die Steuereinheit 1 des Autoradios angeschlossen. Dadurch hat diese Steuereinheit 1 Zugriff auf die auf dem Datenbus 8 vorhandenen Fahrzeugzustandssignale. Mittels der Steuereinheit 1 erfolgt dann, ebenso wie beim ersten Ausführungsbeispiel, eine Auswertung der unterschiedlichen Fahrzeugzustände und der mittels der Bedieneinheit 4 des Autoradios eingegebenen Bedienbefehle, um Steuersignale für Funktionseinheiten A1 bis An zu erzeugen, wobei diese Steuersignale - wie oben beschrieben - abhängig von dem jeweils vorhandenen Zustand des Fahrzeugs sind.

In einer weiteren vorteilhaften Ausgestaltung der Erfindung ist vorgesehen, daß über die Bedieneinheit 4 ein Kennlinienfeld aus dem Speicher 3 gelöscht werden kann, oder daß ein Kennlinienfeld durch eine anderes, beispielsweise dem werkseitig eingestellten, ersetzt werden kann, oder daß das Kennlinienfeld über die Bedieneinheit 4 manuell korrigiert werden kann. Im weiteren ist vorgesehen die automatische Einstellung der Funktionseinheiten über die Bedieneinheit 4 zu aktivieren und/oder zu deaktivieren. Im weiteren ist vorgesehen einzelne Stützpunkte des Kennlinienfeldes manuell zu korrigieren.

## Patentansprüche

1. Vorrichtung zur Steuerung der Funktionen eines Autoradios, welche eine Steuereinheit (1) aufweist, welche in Ansprache auf mittels einer Bedieneinheit (4) eingegebene Bedienbefehle Steuersignale an Funktionseinheiten (A1) bis (An) des Autoradios liefert, wobei die
- die Steuereinheit (1) mit einer Speichereinheit (3) verbunden ist,
- die Steuereinheit (1) mit Fahrzeugzustandsdetektoren (E1) bis (En) verbunden ist,
- in der Speichereinheit (3) ein fahrzeugspezifisches Kennlinienfeld abgespeichert ist, welches einen Zusammenhang zwischen den Fahrzeugzuständen, welche mittels der Fahrzeugzustandsdetektoren (E1) bis (En) erfasst werden, und den Einstellungen der Funktionseinheiten (A1) bis (An) darstellt,
- die Steuereinheit (1) Steuersignale zur Einstellung der Funktionseinheiten (A1) bis (An), in Abhängigkeit von den Ausgangssignalen der Fahrzeugzustandsdetektoren (E1) bis (En) mittels des in der Speichereinheit (3) abgelegten Kennlinienfeld erzeugt,
**dadurch gekennzeichnet,**
**dass** die Steuereinheit (1) Einstellungsveränderungen des Fahrers an der Bedieneinheit (4) erkennt und diese Einstellungen und die aktuellen Fahrzeugzustandsdaten in der Speichereinheit (3) speichert und dass die Steuereinheit (1) aus Einstellungsveränderungen an den Funktionseinheiten (A1) bis (An) des Autoradios in Abhängigkeit von Fahrzeugzuständen das Kennlinienfeld in der Speichereinheit (3) entsprechend abändert oder ein neues Kennlinienfeld generiert.

2. Vorrichtung nach Anspruch 1
**dadurch gekennzeichnet,**
**dass** das Kennlinienfeld für jede Funktionseinheit (A1) bis (An) eine Kennlinie in Abhängigkeit eines jeden von den Fahrzeugzustandsdetektoren erfassbaren Fahrzeugzuständen aufweist.

3. Vorrichtung nach einem oder mehreren der vorhergehenden Ansprüche,
**dadurch gekennzeichnet,**
**dass** die Steuereinheit (1) neben den Fahrzeugzuständen weitere Faktoren wie Hörgewohnheiten des Fahrers in Bezug aus Navigationsdurchsagen, Verkehrsfunkdurchsagen usw., bzw. die Hörgewohnheiten des Fahrers in Abhängigkeit weiterer Umstände, wie zum Beispiel, ob der Fahrer telefoniert, oder welche Sitzplatzbelegung im Fahrzeug vorliegt, in die Kennfeldermittlung oder Kennfeldabänderung einbezieht.

4. Vorrichtung nach einem oder mehreren der vorhergehenden Ansprüche,
**dadurch gekennzeichnet,**
**dass** der Fahrzeugzustandsdetektor (E1) die Geschwindigkeit des Fahrzeuges erfasst,
**dass** der Fahrzeugzustandsdetektor (E2) die Motordrehzahl des Fahrzeuges erfasst,
**dass** der Fahrzeugzustandsdetektor (E3) den Zustand der Fenster des Fahrzeuges erfasst, d.h. ob und/oder welche Fenster geöffnet oder geschlossen sind ,
**dass** der Fahrzeugzustandsdetektor (E4) den Zustand des Schiebedaches des Fahrzeuges erfasst, d.h. ob dieses geöffnet ist und
**dass** der Fahrzeugzustandsdetektor (E5) die aktivierbaren Gebläsestufen der Lüftung des Fahrzeuges erfasst.

5. Vorrichtung nach einem oder mehreren der vorhergehenden Ansprüche,
**dadurch gekennzeichnet,**
**dass** die Funktionseinheit (A1) die Lautstärkeregelung,
**dass** die Funktionseinheit (A2) die Höhenregelung,
**dass** die Funktionseinheit (A3) die Bassregelung,
**dass** die Funktionseinheit (A4) die Überblendregelung,
**dass** die Funktionseinheit (A5) die Balanceregelung,
**dass** die Funktionseinheit (A6) die Equalizerregelung,
**dass** die Funktionseinheit (A7) die Dynamikkompressionsregelung und
**dass** die Funktionseinheit (A8) die DSP-Effektregelung ist.

6. Vorrichtung nach einem oder mehreren der vorhergehenden Ansprüche,
**dadurch gekennzeichnet,**
**dass** die Steuereinheit (1) Einstellungsveränderungen des Fahrers an den Funktionseinheiten (A1) bis (An) des Autoradios in Abhängigkeit von Fahrzeugzustände nur dann in der Speichereinheit (3) speichert und das Kennlinienfeld abändert, wenn ein Fahrzeugzustand nach der Einstellungsveränderung über einen längeren Zeitraum annähernd konstant bleibt.

7. Vorrichtung nach Anspruch 7,
**dadurch gekennzeichnet,**
**dass** der längere Zeitraum mindestens 3 Sekunden beträgt.

8. Vorrichtung nach einem oder mehreren der vorhergehenden Ansprüche,
**dadurch gekennzeichnet,**
**dass** die Steuereinheit (1) die Einstellungen an den Funktionseinheiten (A1) bis (An), welche der Fahrer über die Bedieneinheit (4) vornimmt über die Zeit mittelt, um Streuungen bei den Einstellungen zu mitteln.

9. Vorrichtung nach einem oder mehreren der vorhergehenden Ansprüche,
**dadurch gekennzeichnet,**
**dass** die Steuereinheit (1) mit einem Datenbus (8) des Fahrzeugs verbunden ist, über welchen fahrzeugspezifische Daten übertragen werden, und die Fahrzeugzustandsdetektoren (E1) bis (En) zur Lieferung derartiger fahrzeugspezifischer Daten vorgesehen sind.

10. Vorrichtung nach einem oder mehreren der vorhergehenden Ansprüche,
**dadurch gekennzeichnet,**
**dass** die Steuereinheit (1) den Fahrer des Fahrzeuges mittels eines im Kraftfahrzeugschlüssel integrierten Transponders identifiziert.

11. Vorrichtung nach einem oder mehreren der vorhergehenden Ansprüche,
**dadurch gekennzeichnet,**
**dass** die Steuereinheit (1) für jeden Fahrer ein Kennlinienfeld generiert, welches den Hörgewohnheiten des Fahrers entspricht und
**dass** die Steuereinheit (1) beim Erkennen eines Fahrers das für den Fahrer ermittelte Kennlinienfeld automatisch zur Einstellung der Funktionseinheiten (A1) bis (An) in Abhängigkeit des jeweiligen Fahrzeugzustandes einstellt.

## Claims

1. An apparatus for controlling the functions of a car radio having a control unit (1) which delivers control signals to functional units (A1) to (An) of the car radio in response to operating commands input by means of an operating unit (4), wherein
- the control unit (1) is connected to a memory unit (3);
- the control unit (1) is connected to vehicle state detectors (E1) to (En);
- a characteristic field plot specific to the vehicle is stored in the memory unit (3) and represents an association between the vehicle states detected by means of the vehicle state detectors (E1) to (En) and the settings of the functional units (A1) to (An);
- the control unit (1) generates control signals to set the functional units (A1) to (An) in dependence on the output signals of the vehicle state detectors (E1) to (En) by means of the characteristic field plot stored in the control unit (3),
**characterized in that**
the control unit (1) detects setting changes of the driver at the operating unit (4) and stores these settings and the current vehicle state data in the memory unit (3); and **in that** the control unit (1) appropriately modifies the characteristic field plot in the memory unit (3) in dependence on vehicle states based on setting changes at the functional units (A1) to (An) of the car radio or generates a new characteristic field plot.

2. An apparatus in accordance with claim 1, **characterized in that** the characteristic field plot for each functional unit (A1) to (An) has a characteristic curve in dependence on every vehicle state detectable by the vehicle state detectors.

3. An apparatus in accordance with one or more of the preceding claims, **characterized in that**, in addition to the vehicle states, the control unit (1) includes further factors in the determination or change of the characteristic field plot such as listening habits of the driver in relation to navigation messages, traffic radio messages, etc. and/or the listening habits of the driver in dependence on further circumstances such as whether the driver is on the phone or what seat occupation is present in the vehicle.

4. An apparatus in accordance with one or more of the preceding claims, **characterized**
**in that** the vehicle state detector (E1) detects the speed of the vehicle;
**in that** the vehicle state detector (E2) detects the engine speed of the vehicle;
**in that** the vehicle state detector (E3) detects the state of the windows of the vehicle, i.e. whether and/or which windows are open or closed;
**in that** the vehicle state detector (E4) detects the state of the sun roof of the vehicle, i.e. whether it is open; and
**in that** the vehicle state detector (E5) detects the actuable fan stages of the ventilation of the vehicle.

5. An apparatus in accordance with one or more of the preceding claims, **characterized**
**in that** functional unit (A1) is the volume control;
**in that** functional unit (A2) is the treble control;
**in that** functional unit (A3) is the bass control;
**in that** functional unit (A4) is the fade control;
**in that** functional unit (A5) is the balance control;
**in that** functional unit (A6) is the equalizer control;
**in that** functional unit (A7) is the dynamic compression control; and
**in that** functional unit (A8) is the DSP effect control.

6. An apparatus in accordance with one or more of the preceding claims, **characterized in that** the control unit (1) only stores setting changes of the driver at the functional units (A1) to (An) of the car radio in dependence on vehicle states and only changes the characteristic field plot when a vehicle state remains approximately constant over a longer period of time after the setting change.

7. An apparatus in accordance with claim 6, **characterized in that** the longer period of time amounts to at least 3 seconds.

8. An apparatus in accordance with one or more of the preceding claims, **characterized in that** the control unit (1) forms the time average of the settings at the functional units (A1) to (An) which the driver makes via the operating unit (4) to average scattered values in the adjustments.

9. An apparatus in accordance with one or more of the preceding claims, **characterized in that** the control unit (1) is connected to a data bus (8) of the vehicle via which data specific to the vehicle are transmitted and the vehicle status detectors (E1) to (En) are provided to deliver such data specific to the vehicle.

10. An apparatus in accordance with one or more of the preceding claims, **characterized in that** the control unit (1) identifies the driver of the vehicle by means of a transponder integrated in the motor vehicle key.

11. An apparatus in accordance with one or more of the preceding claims, **characterized**
**in that** the control unit (1) generates a characteristic field plot for every driver which corresponds to the listening habits of the driver; and
**in that** the control unit (1), on recognition of a driver, automatically sets the characteristic field plot determined for the driver for the setting of the functional units (A1) to (An) in dependence on the respective vehicle state.

## Revendications

1. Dispositif pour commander les fonctions d'un autoradio, dispositif qui comporte une unité de commande (1), qui, en réponse à des instructions de commande introduites au moyen d'une unité de manipulation (4), délivre des signaux de commande à des unités fonctionnelles (A1) à (An) de l'autoradio, dans lequel
- l'unité de commande (1) est reliée à une unité de mémoire (3),
- l'unité de commande (1) est reliée à des détecteurs (E1) à (En) d'état du véhicule,
- dans l'unité de mémoire (3) est mémorisé un champ de courbes caractéristiques qui est spécifique au véhicule et qui représente une relation entre les états du véhicule, qui sont détectés au moyen des détecteurs (E1) à (En) d'état du véhicule et les réglages des unités fonctionnelles (A1) à (An),
- l'unité de commande (1) produit des signaux de commande pour le réglage des unités fonctionnelles (A1) à (An), en fonction des signaux de sortie détectés (E1) à (En) d'état du véhicule à l'aide du champ de courbes caractéristiques mémorisé dans l'unité de mémoire (3),
**caractérisé en ce que**
l'unité de commande (1) identifie des modifications de réglage du conducteur au niveau de l'unité de commande (4) et mémorise ces réglages et les données actuelles d'état du véhicule dans l'unité de mémoire (3) et **en ce que** l'unité de commande (1) modifie de façon correspondante le champ de courbes caractéristiques dans l'unité de mémoire (3) à partir de modifications de réglage sur des unités fonctionnelles (A1) à (An) de l'autoradio en fonction d'états du véhicule, ou produit un nouveau champ de courbes caractéristiques.

2. Dispositif selon la revendication 1, **caractérisé en ce que** le champ de courbes caractéristiques pour chaque unité fonctionnelle (A1) à (An) possède une courbe caractéristique en fonction de chacun des états du véhicule pouvant être détecté par les détecteurs d'état du véhicule.

3. Dispositif selon une ou plusieurs des revendications précédentes, **caractérisé en ce que** l'unité de commande (4) inclut, en dehors des états du véhicule, d'autres facteurs tels que des habitudes acoustiques du conducteur en rapport avec des transmissions relatives à la navigation, des transmissions radio de trafic, etc., ou des habitudes acoustiques du conducteur en fonction d'autres conditions, comme par exemple le fait que le conducteur téléphone, ou l'occupation des sièges dans le véhicule, dans la détermination du champ de caractéristiques ou dans la modification du champ de caractéristiques.

4. Dispositif selon une ou plusieurs des revendications précédentes, **caractérisé en ce**
**que** le détecteur (E1) d'état du véhicule détecte la vitesse du véhicule,
**que** le détecteur (E2) d'état du véhicule détecte la vitesse de rotation du moteur du véhicule,
**que** le détecteur (E3) d'état du véhicule détecte l'état des fenêtres du véhicule, c'est-à-dire détecte si et/ou quelles fenêtres sont ouvertes ou fermées,
**que** le détecteur (E4) d'état du véhicule détecte l'état du toit coulissant du véhicule, c'est-à-dire détermine si ce dernier est ouvert, et
**que** le détecteur (E5) d'état du véhicule détecte les niveaux pouvant être activés du ventilateur du système d'aération du véhicule.

5. Dispositif selon une ou plusieurs des revendications précédentes, **caractérisé en ce**
**que** l'unité fonctionnelle (A1) est la régulation de l'intensité acoustique,
**que** l'unité fonctionnelle (A2) est la régulation des aiguës,
**que** l'unité fonctionnelle (A3) est la régulation des basses,
**que** l'unité fonctionnelle (A4) est la régulation de mélange en superposition,
**que** l'unité fonctionnelle (A5) est la régulation de la balance,
**que** l'unité fonctionnelle (A6) est la régulation de l'égaliseur,
**que** l'unité fonctionnelle (A7) est la régulation de la compression dynamique, et
**que** l'unité fonctionnelle (A8) est la régulation de l'effet DSP.

6. Dispositif selon une ou plusieurs des revendications précédentes, **caractérisé en ce que** l'unité de commande (1) mémorise des variations de réglage du conducteur au niveau des unités fonctionnelles (A1) à (An) de l'autoradio en fonction d'états du véhicule dans l'unité de mémoire (3) et modifie le champ de courbes caractéristiques uniquement lorsqu'après la modification de réglage, un état du véhicule reste approximativement constant pendant un assez long intervalle de temps.

7. Dispositif selon la revendication 7, **caractérisé en ce que** l'intervalle de temps assez long est égal à au moins 3 secondes.

8. Dispositif selon une ou plusieurs des revendications précédentes, **caractérisé en ce que** l'unité de commande (1) forme la moyenne dans le temps des réglages apportés aux unités fonctionnelles (A1) à (An), que le conducteur exécute à l'aide de l'unité de commande (4), pour former la moyenne de dispersion lors des réglages.

9. Dispositif selon une ou plusieurs des revendications précédentes, **caractérisé en ce que** l'unité de commande (1) est reliée à un bus de données (8) du véhicule, au moyen duquel des données spécifiques au véhicule sont transmises, et des détecteurs (E1) à (En) de l'état du véhicule sont prévus pour la délivrance de telles données spécifiques au véhicule.

10. Dispositif selon une ou plusieurs des revendications précédentes, **caractérisé en ce que** l'unité de commande (1) identifie le conducteur du véhicule à l'aide d'un transpondeur intégré dans la clé du véhicule automobile.

11. Dispositif selon une ou plusieurs des revendications précédentes, **caractérisé en ce**
**que** l'unité de commande (1) génère pour chaque conducteur un champ de courbes caractéristiques, qui correspond à les habitudes acoustiques du conducteur, et
**que** lors de l'identification d'un conducteur, l'unité de commande (1) règle automatiquement le champ de courbes caractéristiques établi pour le conducteur, pour le réglage des unités fonctionnelles (A1) à (An) en fonction de l'état respectif du véhicule.
